# EUROPÄISCHE PATENTSCHRIFT

(11) **EP 1 745 915 B1**
(45) Veröffentlichungstag und Bekanntmachung des Hinweises auf die Patenterteilung: **07.05.2014**
(21) Anmeldenummer: 06014996.0
(22) Anmeldetag: 19.07.2006
(51) Int. Cl.: B29C 65/02, B29C 65/18, B29C 65/74, B65B 51/30, B65H 19/18

(54) **Vorrichtung zum Verschweissen von thermoplastischem Kunststoff**
Device for welding thermoplastics
Dispositif pour souder des thermoplastiques

(30) Priorität: 22.07.2005 DE 102005034287
(43) Veröffentlichungstag der Anmeldung: 24.01.2007
(73) Patentinhaber: Rovema GmbH, 35463 Fernwald-Annerod (DE)
(72) Erfinder: Epp, Alexander, 35041 Marburg (DE); Baur, Walter, Dr., 63584 Gründau (DE)
(74) Vertreter: von den Steinen, Axel

(56) Entgegenhaltungen:
- EP-A2- 1 101 856
- DE-A1- 10 005 020
- DE-A1- 19 949 915
- DE-U1- 9 421 649
- FR-A- 1 418 341
- FR-A1- 2 504 495
- JP-A- 1 228 826
- US-A1- 2003 024 208

## Beschreibung

Der Anmeldegegenstand betrifft den Verpackungsmaschinenbau und dort eine Vorrichtung zum Verschweißen von thermoplastischem Kunststoff, insbesondere einer Folienbahn, welche einen derartigen; schweißfähigen Kunststoff aufweist.

Um eine Folienbahn zum Zwecke einer Erzeugung von Beuteln zu verschweißen, ist es bekannt, die Folienbahn umzuformen und mittels gegeneinander bewegbarer Backenkörper oder mittels eines einzigen, gegen einen Widerstand wirkenden Backenkörpers zu verschweißen. Derartige Backenkörper werden bei vertikalen und horizontalen Schlauchbeutelmaschinen zur Beutelerzeugung oder zum Anschweißen einer neuen Folienbahn an eine nahezu aufgebrauchte Folienbahn (sogenannter Splicer) eingesetzt.

Die bekannten Vorrichtungen weisen einen Backenkörper auf, mindestens eine Siegelfläche am Backenkörper und eine Heizeinrichtung zum Erwärmen der Siegelfläche bzw. der Siegelflächen, um den in Wärmekontakt mit der Siegelfläche befindlichen Kunststoff aufschmelzen und verschweißen zu können. Des weiteren ist aus der DE100 05 020 A1 ein beheizbarer Einsatz zum Einsetzen in den Backenkörper bekannt, wobei am Einsatz die Siegelfläche in einer Siegelposition vorgesehen ist. Die Verschweißung des Kunststoffes wird hierbei durch den erwärmten Einsatz ausgeführt, wenn der Backenkörper gegen den Kunststoff gesetzt ist.

Eine weitere Ausführung mit einer wechselbaren Siegelfläche offenbart die Druckschrift DE 94 21 649 U1. Durch die Ausführung der Schweißbacken mit einer Aufnahme für ein Schweißelement kann ein schneller Austausch des Schweißelements ohne Wechsel der gesamten Schweißbacken erfolgen.

Weiterhin skizziert die Druckschrift DE 199 49 915 A1 eine Schweißvorrichtung, bei welcher an einer beheizbaren Siegelbacke auswechselbare Siegelflächenteile vorgesehen sind. Durch ein einfachen und unkomplizierten Wechsel der Siegelflächenteile kann die beim Schweißvorgang in Kontakt mit dem Schlauchbeutel stehende Siegelfläche jeweils hinsichtlich der optimalen Schweißeigenschaften an das zu verschweißende Material angepasst werden.

Vergleichbares zeigt die Druckschrift US 2003/0024208 mit einer Schweißvorrichtung zur Handbetätigung. Hierbei ist wiederum vorgesehen, dass an einem Grundkörper ein wechselbares Siegelteil angebracht ist, wodurch mittels Tausch des Siegelteils eine Anpassung an das zu verscheißende Material erfolgen kann.

Naheliegend ist es ebenso, dass mit vorherigen Ausführungsformen ebenso ein unkomplizierter Tausch im Falle des Verschleißes der Siegelfläche vorgenommen werden kann.

Wenngleich nicht die komplette Siegelbacke auszutauschen ist, verbleibt bei bekannten Vorrichtung der Nachteil, dass zumindest Elemente mit der Siegelfläche ausgetauscht werden müssen, wenn die Siegelfläche nicht mehr genutzt werden soll, z. B. weil eine anders ausgeführte Folienbahn eingesetzt werden soll, die eine spezielle Siegelflächenbeschichtung erfordert, oder wenn eine Beschichtung einer Siegelfläche abgenutzt ist, und wiederum eine beschichtete Siegelfläche benötigt wird.

Es liegt die Aufgabe zugrunde, eine Vorrichtung gemäß dem Oberbegriff des Anspruchs 1 derart weiterzubilden, dass eine andere Siegelfläche ohne Austausch genutzt werden kann.

Gelöst ist die Aufgabe gemäß dem kennzeichnenden Teil des Anspruchs 1. Danach ist am Einsatz mindestens eine weitere Siegelfläche vorgesehen, welche durch Wenden des Einsatzes in die Siegelposition bringbar ist.

Die vorgeschlagene Vorrichtung hat den Vorteil dass eine andere Siegelfläche vorgesehen werden kann, indem der Einsatz gewendet wird. Dabei gelangt eine weitere Siegelfläche in die Siegelposition und kann zum Verschweißen einer Kunststoffbahn genutzt werden. Ein Austausch der kompletten Vorrichtung ist nicht nötig. Das Wenden kann auf unterschiedliche Art und Weise erfolgen. So kann ein in den Backenkörper lediglich eingesteckter Einsatz aus diesem entnommen, um einen bestimmten Winkel gedreht und dann wieder eingesetzt werden. Oder der Einsatz ist um eine Achse drehbar und in jeweils einer bestimmten Winkelposition fixierbar. In jedem Fall stehen mindestens zwei Siegelflächen des Einsatzes zur Verfügung.

Erfindungsgemäß ist hierbei vorgesehen, dass ergänzend zu einer beschichteten oder unbeschichteten Siegelfläche auf zumindest einer Siegelfläche eine Antihaftbeschichtung angebracht ist. Somit wird eine zuverlässige Verschweißung beispielsweise einer Monofolie mit einer dauerbezeizten Siegelfläche ermöglicht, ohne dass es zu einem Anhaften des aufgeschmolzenen Kunststoffes an der Siegelfläche kommt.

Weitere, vorteilhafte Ausgestaltungen der vorgeschlagenen Neuerung sind in den Ansprüchen 2 bis 9 beschrieben.

Hat der Einsatz einen rechteckigen Querschnitt (Anspruch 2), so können zwei, drei oder vier Siegelflächen am Einsatz genutzt werden. Dabei können unterschiedlich hohe Siegelflächen vorgesehen werden, um unterschiedliche Schweißnähte zu erreichen. Oder der Querschnitt ist quadratisch (Anspruch 3), so dass bis zu vier gleiche Siegelflächen ausgebildet werden können, welche nach jeweils einer 90 Grad-Wendung des Einsatzes nacheinander nutzbar sind. Aber auch ein dreieckiger oder ein sechseckiger Querschnitt (Anspruch 4) ist von Vorteil. Im ersten Fall stehen drei Siegelflächen am Einsatz zur Verfügung, welche nach jeweils einer 120 Grad-Drehung des Einsatzes in die Siegelposition gelangen. Im zweiten Fall gelangt eine andere Siegelfläche nach einer 60-Grad-Drehung in diese Position. Gerade bei dieser Ausgestaltung des Einsatzes wird eine einfache und zuverlässige, dauerhafte und neutrale Nutzung des wendbaren Einsatzes erreicht. Die Rentabilität ist am größten, wenn alle Querschnittsbegrenzungen des Einsatzes mit jeweils einer Siegelfläche versehen sind, d. h., wenn gemäß Anspruch 5 pro gerader Quorschnittsbegrenzung (Begrenzung des Querschnitts des Einsatzes) eine Siegelfläche vorgesehen ist.

Es kommt vor, dass nach Durchführung eines Verpackungsvorganges, bei welchem eine Mehrschichtfolie (Laminatfolie) zu verschweißen war, eine Monofolie, z. B. aus Polyethylen verscheißt werden soll. Während für die Mehrschichtfolie eine unbeschichtete Siegelfläche, die eine gute Wärmeübertragung in eine äußere Kunststoffschicht, z. B. Polypropylen, erreicht, ideal ist, muss eine Monofolie, sofern eine dauerbeheizte Siegelfläche vorgesehen ist, mit einer Siegelfläche verschweißt werden, auf welcher eine Antihaftbeschichtung angebracht ist, um ein Anhaften des aufgeschmolzenen Kunststoffes an der Siegelfläche zu vermeiden.

Besonders vorteilhaft ist es daher, wenn ergänzend zur erfindungsgemäßen Ausführung einer mit einer Antihaftbeschichtung versehenen Siegelfläche eine andere Siegelfläche unbeschichtet ist. Weiterhin ist es vorteilhaft, wenn die Antihaftbeschichtung Polytetrafluorethylen enthält. Durch diese vorteilhafte Ausführung kann durch einfaches Wenden des Einsatzes eine Siegelfläche mit oder ohne Antihaftbeschichtung in eine Siegelposition gebracht werden, um eine Monofolie oder eine Mehrschichtfolie zu verschweißen.

Ist die Heizeinrichtung in den Einsatz integriert (Anspruch 6), so ist die Wärmeübertragung von der Heizeinrichtung hin zu einer der Siegelflächen besonders effektiv, da zu jeder Siegelfläche hin nur ein kurzer Weg für die Wärmeleitung vorgesehen ist. Zudem werden Wärmeübergänge an Grenzschichten zweier Materialien vermieden. Dabei kann die Heizeinrichtung als Widerstandsheizelement, z. B. in Form einer Heizpatrone ausgeführt sein. Ein äußerer Mantel der Heizeinrichtung kann dabei die Siegelflächen ausbilden. Dabei eignen sich dreieckige, rechteckige oder sechseckige Querschnitte der Heizeinrichtung zum Ausbilden von Siegelflächen.

Ist der Einsatz in einstückiger Weise ausgeführt, und weist er zwei parallel zueinander ausgerichtete Siegelflächen in der Siegelposition auf (Anspruch 7), so eignet er sich für Quersiegelbacken einer vertikalen Schlauchbeutelmaschine. Durch Wenden des Einsatzes können zwei andere Siegelflächen in die Siegelposition gebracht werden.

Die Vorrichtung ist auch als Längssiegelbacke einer vertikalen Schlauchbeutelmaschine, als Splicer (Anspruch 9) oder als Schweißbacke einer horizontalen Beutelmaschine geeignet.

Der Einsatz kann einstückig oder zweistückig in einer Quersiegelbacke einer vertikalen Schlauchbeutelmaschine vorgesehen werden, wobei zwischen zwei parallel zueinander ausgerichteten, in der Siegelposition befindlichen Siegelflächen eine auslenkbare Trenneinrichtung zum Durchtrennen einer Folienbahn vorgesehen ist.

Im folgenden wird die vorgeschlagene Neuerung an Hand Ausführungsbeispiele darstellenden Figuren näher beschrieben. Es zeigt:
- Figur 1: in einer Seitenansicht eine vertikale Schlauchbeutelmaschine, die einen Splicer, eine Längssiegelbacke und Quersiegelbacken mit jeweils mindestens einem wendbaren Einsatz aufweist;
- Figur 2: in einer Schnittdarstellung die Quersiegelbacken der Figur 1 beim Anlegen an einen Folienschlauch, wobei jeweils zwei wendbare, unbeschichtete Siegelflächen an jeweils zwei Einsätzen pro Quersiegelbacke vorgesehen sind;
- Figur 3: in einer Schnittdarstellung eine Längssiegelbacke analog der in Figur 1 dargestellten, jedoch beim Verschweißen eines aus einer Monofolie gebildeten Folienschlauches, und mit jeweils einer Antihaftbeschichtung auf zwei Siegelflächen eines wendbaren Einsatzes;
- Figur 4: in einer Schnittdarstellung einen Splicer analog dem in Figur 1 dargestellten, jedoch mit einer beschichteten äußeren, in einer Siegelposition befindlichen, ersten Siegelfläche und einer zweiten unbeschichteten Siegelfläche eines wendbaren Einsatzes, um wahlweise Monofolienbahnen oder Mehrschichtfolienbahnen aneinander zu schweißen;
- Figur 5: in einer Seitenansicht die beiden Siegelflächen einer Quersiegelbacke, in welche ein wendbarer, einstückig ausgebildeter Einsatz eingesteckt ist, der zum Erzeugen jeweils einer Kopfnaht eines Schlauchbeutels und einer Bodennaht eines nachfolgenden Schlauchbeutels vorgesehen ist, sowie
- Figur 6: in einer um 90 Grad relativ zur Ansicht der Figur 5 versetzten Seitenansicht den Einsatz der Quersiegelbacke der Figur 5.

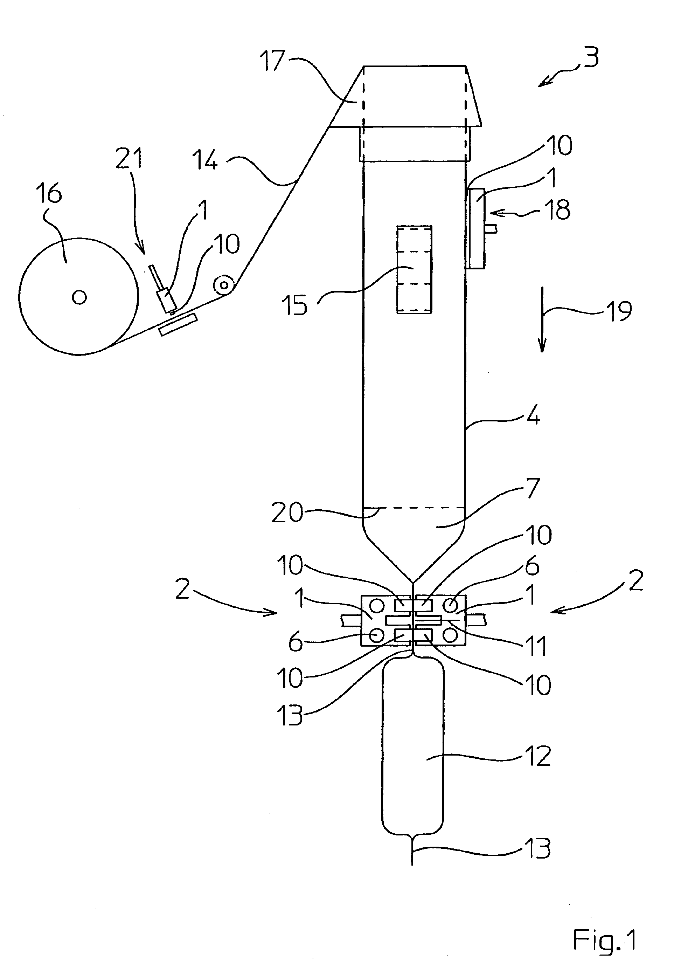

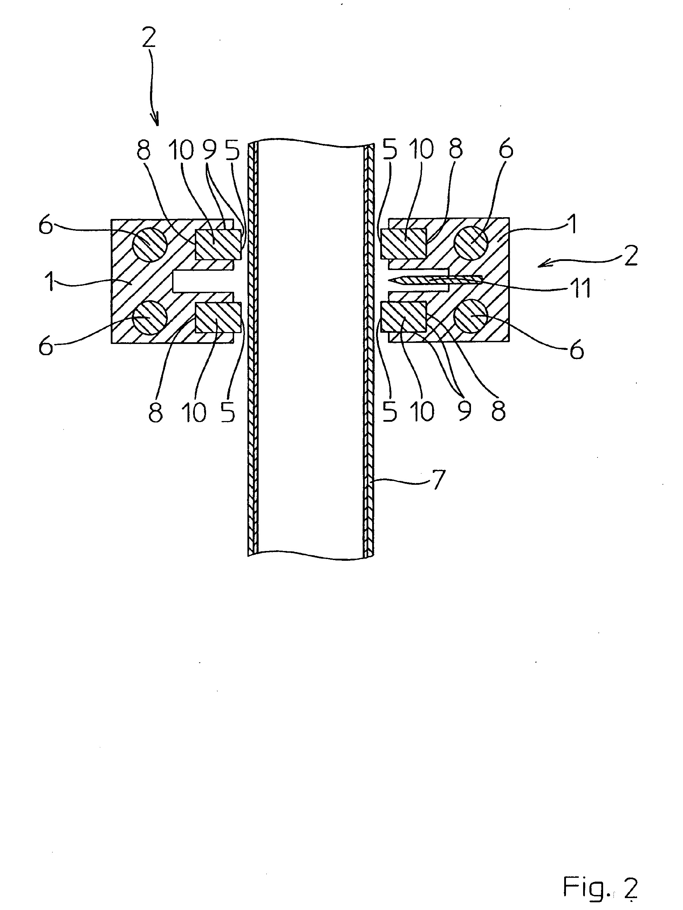

Bei einer vertikalen Schlauchbeutelmaschine 3 wird eine aus zwei Lagen aufgebaute Folienbahn 14 mittels eines Folienabzugs 15 von einer Vorratsrolle 16 abgerollt und über eine Formschulter 17 gezogen (Figur 1). Die Folienbahn 14 wird dabei zu einem Folienschlauch 7 umgeformt, der ein vertikal ausgerichtetes Füllrohr 20 umgibt, durch welches das untere Ende des Folienschlauches 7 befüllt werden kann. Der Folienschlauch 7 wird mittels einer gegen das Füllrohr 20 wirkenden Längssiegelbacke 18 parallel zur Folientransportrichtung 19 unter Erzeugung einer Längsnaht 4 verschweißt. Zwei gegeneinander bewegbare, den Folienschlauch 7 zwischen ihren Siegelflächen 5 einklemmende Quersiegelbacken 2 (Figur 2) dienen der Erzeugung von Quernähten 13. Jeweils zwei Quernähte 13 werden gleichzeitig erzeugt und bilden die Kopfnaht eines Schlauchbeutels 12 und die Bodennaht eines nachfolgenden Schlauchbeutels 12. Eine Trenneinrichtung 11 dient zum Abtrennen jeweils eines befüllten und verschlossenen Schlauchbeutels 12 vom Folienschlauch 7. Ein Splicer21 ist dazu vorgesehen, nach einem Verbrauch der gesamten Vorrats rolle 16 eine neue Folienbahn 14 einer neuen Vorratsrolle 16 an das Ende der vorherigen Folienbahn 14 anzuschweißen.

Insgesamt sind vier Vorrichtungen zum Verschweißen der Folienbahn 14 vorgesehen. Es sind der Splicer 21, die Längssiegelbacke 18 und die beiden Quersiegelbacken 2. Jede Vorrichtung zum Verschweißen weist einen Backenkörper 1 auf. Während am Splicer 21 und an der Längssiegelbacke 18 jeweils eine in einer Siegelposition befindliche Siegelfläche 5 vorgesehen ist, sind pro Quersiegelbacke 2 je zwei Siegelflächen 5 in der Siegelposition. Jede Vorrichtung zum Verschweißen ist mit mindestens einer Heizeinrichtung 6 zum Erwärmen einer Siegelfläche 5 ausgestattet um den Kunststoff der Folienbahn 14 aufschmelzen und verschweißen zu können. Jede Siegelfläche 5 befindet sich an einem Einsatz 10, der in den entsprechenden Backenkörper 1 eingesteckt ist. An jedem Einsatz 10 ist eine weitere unbeschichtete Siegelfläche 8 vorgesehen, welche durch Wenden des Einsatzes 10 um 180 Grad in die Siegelposition bringbar ist. Dabei hat jeder Einsatz 10 einen rechteckigen Querschnitt. Wäre der Einsatz 10 jeweils mit einem quadratischen Querschnitt ausgeführt, so könnten an seinen vier Querschnittsbegrenzungen 9 vier Siegelflächen 5, 8 ausgebildet sein.

Die weiteren Siegelflächen 8 können durch Wenden des Einsatzes 10 jeweils dann genutzt werden, wenn die zuvor genutzte Siegelfläche 5 in Folge einer festgestellten Wölbung der Siegelfläche 5, z. B. hervorgerufen durch eine mechanische Deformation, nicht mehr für einen konstanten Schweißdruck über die gesamte Siegelfläche 5 nutzbar ist.

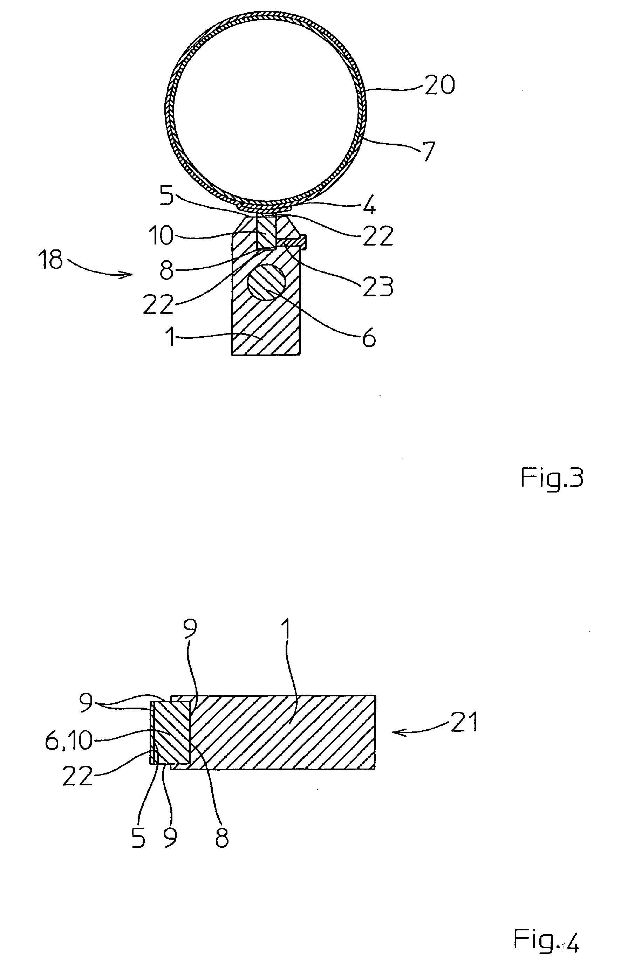

Beim Ausführungsbeispiel der Figur 3 ist sowohl eine Siegelfläche 5 eines mittels einer Klemmeinrichtung 23 gehaltenen Einsatzes 10 einer Längssiegelbacke 18 als auch eine weitere Siegelfläche 8 mit einer Antihaftbeschichtung 22, die Polytetrafluorethylen enthält, versehen. Insofern können beide Siegelflächen 5, 8 zum Verschweißen von Polyethylenmonofolie genutzt werden. Ist die Antihaftbeschichtung 22 der Siegelfläche 5 nach längerer Nutzungsdauer abgenutzt, so kann ohne Backenwechsel nach Lösen der Klemmeinrichtung 23 der Einsatz 10 gewendet werden, um die Siegelfläche 8, die eine unverbrauchte Antihaftbeschichtung 22 hat, in dieSiegelposition zu bringen. Die Siegelfläche 8 könnte jedoch auch unbeschichtet sein, um die Längssiegelbacke 18 wahlweise für Verbundfolien zu nutzen, bei welchen keine Antihaftbeschichtung 22 notwendig ist. Zwar können Verbundfolien auch mittels Antihaftbeschichtungen 22 verschweißt werden, dies wäre jedoch unwirtschaftlich, da diese Beschichtungen stets nur eine bestimmte Nutzungsdauer haben, und eine Neubeschichtung einen zusätzlichen Aufwand mit sich bringt.

Beim Ausführungsbeispiel der Figur 4 weist eine Siegelfläche 5 eine Antihaftbeschichtung 22 auf und eine weitere Siegelfläche 8 ist unbeschichtet, um einen Splicer21 wahlweise für Monofolien oder Verbundfolien zu nutzen. In den Einsatz 10, der die beiden Siegelflächen 5, 8 aufweist, ist eine Heizeinrichtung 6 integriert, um durch dort fließenden Strom eine schnelle und direkte Aufwärmung der Siegelflächen 5, 8 zu erreichen.

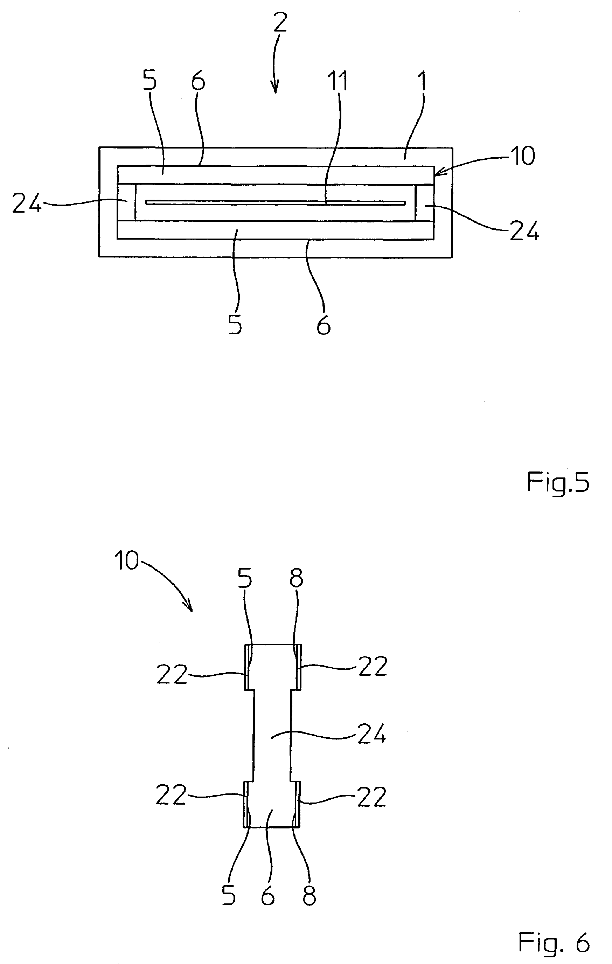

Beim Ausführungsbeispiel der Figuren 5 und 6 ist ein Einsatz 10 in einstückiger Weise ausgeführt. Er weist zwei parallel zueinander ausgerichtete, beschichtete Siegelflächen 5 in einer Siegelposition auf. Durch Drehung des Einsatzes 10 können zwei weitere Siegelflächen 8, die ebenfalls eine Antihaftbeschichtung 22 haben, in die Siegelposition gebracht werden, um jeweils eine als Bodennaht und eine als Kopfnaht dienende Quernaht 13 zu erzeugen.
- 1: Backenkörper
- 2: Quersiegelbacke
- 3: vertikale Schlauchbeutelmaschine
- 4: Längsnaht
- 5: Siegelfläche
- 6: Heizeinrichtung
- 7: Folienschlauch
- 8: Siegelfläche
- 9: Querschnittsbegrenzung
- 10: Einsatz
- 11: Trenneinrichtung
- 12: Schlauchbeutel
- 13: Quernaht
- 14: Folienbahn
- 15: Folienabzug
- 16: Vorratsrolle
- 17: Formschulter
- 18: Längssiegelbacke
- 19: Folientransportrichtung
- 20: Füllrohr
- 21: Splicer
- 22: Antihaftbeschichtung
- 23: Klemmeinrichtung
- 24: Verbindung

## Patentansprüche

1. Vorrichtung zum Verschweißen von thermoplastischem Kunststoff, insbesondere einer Folienbahn (14), welche einen derartigen Kunststoff aufweist, mit einem Backenkörper (1), mindestens einer Siegelfläche (5) am Backenkörper (1), einer Heizeinrichtung (6) zum Erwärmen der Siegelfläche (5), um einen in Wärmekontakt mit der Siegelfläche (5) befindlichen Kunststoff aufschmelzen und verschweißen zu können, mit einem Einsatz (10) zum Einsetzen in den Backenkörper (1), wobei am Einsatz (10) die Siegelfläche (5) in einer Siegelposition vorgesehen ist, sowie am Einsatz (10) mindestens eine weitere Siegelfläche (8) vorgesehen ist, welche durch Wenden des Einsatzes (10) in die Siegelposition bringbar ist, **dadurch gekennzeichnet, dass** eine Siegelfläche (5) beschichtet oder unbeschichtet ist, und eine weitere Siegelfläche (8) mit einer Antihaftbeschichtung (22), die insbesondere Polytetrafluorethylen enthält, vorgesehen ist.

2. Vorrichtung nach Anspruch 1, **dadurch gekennzeichnet, dass** der Einsatz (10) einen rechteckigen Querschnitt aufweist.

3. Vorrichtung nach Anspruch 2, **dadurch gekennzeichnet, dass** der Querschnitt quadratisch ist.

4. Vorrichtung nach Anspruch 1, **dadurch gekennzeichnet, dass** der Einsatz einen dreieckigen oder einen sechseckigen Querschnitt aufweist.

5. Vorrichtung nach einem der Ansprüche 3 bis 4, **dadurch gekennzeichnet, dass** pro gerader Querschnittsbegrenzung (9) eine Siegelfläche (5, 8) vorgesehen ist.

6. Vorrichtung nach einem der Ansprüche 1 bis 5, **dadurch gekennzeichnet, dass** die Heizeinrichtung (6) in den Einsatz (10) integriert ist.

7. Vorrichtung nach einem der Ansprüche 1 bis 6, **dadurch gekennzeichnet, dass** der Einsatz (10) in einstückiger Weise ausgeführt ist, und dabei zwei parallel zueinander ausgerichtete Siegelflächen (5) in der Siegelposition aufweist.

8. Vorrichtung nach einem der Ansprüche 1 bis 6, **dadurch gekennzeichnet, dass** die Vorrichtung als Längssiegelbacke (18) einer vertikalen Schlauchbeutelmaschine (3) oder als Splicer (21) ausgeführt ist.

9. Vorrichtung nach einem der Ansprüche 1 bis 7, **dadurch gekennzeichnet, dass** die Vorrichtung als Quersiegelbacke (2) einer vertikalen Schlauchbeutelmaschine (3) ausgeführt ist, wobei zwischen zwei parallel zueinander ausgerichteten, in der Siegelposition befindlichen Siegelflächen (5) eine auslenkbare Trenneinrichtung (11) zum Durchtrennen einer Folienbahn (14) vorgesehen ist.

## Claims

1. A device for welding thermoplastics, in particular a film web (14) which has such a plastic, having a jaw body (1), at least one sealing surface (5) at the jaw body (1), a heating apparatus for heating the sealing surface (5) in order to be able to melt and weld a plastic that is in thermal contact with the sealing surface (5), having an insert (10) for insertion in the jaw body (1), wherein the sealing surface (5) is provided at the insert (10) in a sealing position, and at least one further sealing surface (8) is provided at the insert (10), which surface can be brought into the sealing position by turning the insert (10), **characterised in that** a sealing surface (5) is coated or uncoated, and a further sealing surface (8) having a non-stick coating (22), which in particular contains polytetrafluoroethylene, is provided.

2. The device according to claim 1, **characterised in that** the insert (10) has a rectangular cross-section.

3. The device according to claim 2, **characterised in that** the cross-section is a square.

4. The device according to claim 1, **characterised in that** the insert has a triangular or a hexagonal cross-section.

5. The device according to any one of claims 3 to 4, **characterised in that** one sealing surface (5, 8) is provided per straight cross-section limitation (9).

6. The device according to any one of claims 1 to 5, **characterised in that** the heating apparatus (6) is integrated into the insert (10).

7. The device according to any one of claims 1 to 6, **characterised in that** the insert (10) is constructed as one piece, having, in the sealing position, two sealing surfaces (5) which are oriented parallel to each other.

8. The device according to any one of claims 1 to 6, **characterised in that** the device is constructed as a longitudinal sealing jaw (18) of a vertical tube bagging machine (3) or as a splicer (21).

9. The device according to any one of claims 1 to 7, **characterised in that** the device is constructed as a transverse sealing jaw (2) of a vertical tube bagging machine (3), wherein a deflectable cutting-off apparatus (11) for severing a film web (14) is provided between two sealing surfaces (5) which are situated in the sealing position and are oriented parallel to each other.

## Revendications

1. Dispositif pour souder une matière thermoplastique, en particulier une bande (14) de film qui présente une telle matière plastique, comportant un corps (1) de mâchoire, au moins une surface (5) de scellement sur le corps (1) de mâchoire, un appareil de chauffage pour chauffer la surface (5) de scellement pour pouvoir fonder et souder une matière plastique qui est en contact thermique avec la surface (5) de scellement, comportant un insert (10) pour être inséré dans le corps (1) de mâchoire, dans lequel la surface (5) de scellement est prévue sur l'insert (10) dans une position de scellement, et au moins une autre surface (8) de scellement est prévue sur l'insert (10), la surface pouvant être mise en la position de scellement en tournant l'insert (10), **caractérisé en ce qu'**une surface (5) de scellement est revêtue ou non revêtue, et une autre surface (8) de scellement comportant un revêtement (22) antiadhésif qui en particulier contient polytétrafluoroéthylène est prévue.

2. Dispositif selon la revendication 1, **caractérisé en ce que** l'insert (10) présente une section rectangulaire.

3. Dispositif selon la revendication 2, **caractérisé en ce que** la section est carrée.

4. Dispositif selon la revendication 1, **caractérisé en ce que** l'insert présente une section triangulaire ou hexagonale.

5. Dispositif selon l'une quelconque des revendications 3 à 4, **caractérisé en ce qu'**une surface (5, 8) de scellement est prévue par limitation (9) de section droite.

6. Dispositif selon l'une quelconque des revendications 1 à 5, **caractérisé en ce que** l'appareil (6) de chauffage est intégré dans l'insert (10).

7. Dispositif selon l'une quelconque des revendications 1 à 6, **caractérisé en ce que** l'insert (10) est réalisé d'un seul tenant, dans la position de scellement, présentant deux surfaces (5) de scellement qui sont orientées parallèlement l'une par rapport à l'autre.

8. Dispositif selon l'une quelconque des revendications 1 à 6, **caractérisé en ce que** le dispositif est réalisé sous la forme d'une mâchoire (18) de scellement longitudinale d'une ensacheuse (3) verticale ou comme un épisseur (21).

9. Dispositif selon l'une quelconque des revendications 1 à 7, **caractérisé en ce que** le dispositif est réalisé comme une mâchoire (2) de scellement transversale d'une ensacheuse (3) verticale, dans lequel un appareil (11) de coupe déviable pour séparer une bande (14) de film est prévu entre deux surfaces (5) de scellement qui se trouvent dans la position de scellement et sont orientées parallèlement l'une par rapport à l'autre.
